# EUROPÄISCHE PATENTSCHRIFT

(11) **EP 2 443 557 B1**
(45) Veröffentlichungstag und Bekanntmachung des Hinweises auf die Patenterteilung: **03.04.2013**
(21) Anmeldenummer: 10723599.6
(22) Anmeldetag: 11.06.2010
(51) Int. Cl.: G06F 13/362, H04L 12/413, H04L 12/40

(54) **VERFAHREN ZUM ÜBERTRAGEN VON DATEN ZWISCHEN TEILNEHMERSTATIONEN EINES BUSSYSTEMS**
METHOD FOR TRANSMITTING DATA BETWEEN SUBSCRIBER STATIONS OF A BUS SYSTEM
DISPOSITIF DE TRANSMISSION DE DONNÉES ENTRE DES STATIONS UTILISATEURS D'UN SYSTÈME DE BUS

(30) Priorität: 16.06.2009 DE 102009026961
(43) Veröffentlichungstag der Anmeldung: 25.04.2012
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2010/058247
(87) Internationale Veröffentlichungsnummer: WO 2010/146002

(56) Entgegenhaltungen:
- WO-A1-2004/105278
- WO-A1-2005/081463
- DE-A1- 10 301 637

## Beschreibung

### Stand der Technik

Die vorliegende Erfindung betrifft ein Verfahren zum Übertragen von Daten zwischen Teilnehmerstationen eines Bussystems über einen von mehreren Teilnehmerstationen gemeinsam genutzten ersten Kanal des Bussystems. Die Erfindung betrifft außerdem eine Teilnehmerstation eines Bussystems, mit einem ersten Steuerelement zum Steuern eines Zugriffs der Teilnehmerstation auf einen von mehreren Teilnehmerstationen gemeinsam genutzten ersten Kanal des Bussystems.

### Offenbarung der Erfindung

Beispielsweise aus der Offenlegungsschrift DE 100 00 305 A1 ist das "Controller Area Network" (CAN) sowie eine als "Time Triggered CAN" (TTCAN) bezeichnete Erweiterung des CAN bekannt. Das beim CAN verwendete Medienzugriffssteuerverfahren beruht auf einer bitweisen Arbitrierung. Bei der bitweisen Arbitrierung können mehrere Teilnehmerstationen gleichzeitig Daten über den Kanal des Bussystems übertragen, ohne dass hierdurch die Datenübertragung gestört wird. Die Teilnehmerstationen können weiterhin beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal. Bei CAN wird die bitweise Arbitrierung üblicherweise in einem Arbitrierungsfeld innerhalb eines über den Kanal zu übertragenden Datenrahmens vorgenommen. Nachdem eine Teilnehmerstation das Arbitrierungsfeld vollständig an den Kanal gesendet hat, weiß sie, dass sie exklusiven Zugriff auf den Kanal hat. Somit entspricht das Ende der Übertragung des Arbitrierungsfelds einem Beginn eines Freigabeintervalls, innerhalb dessen die Teilnehmerstation den Kanal exklusiv nutzen kann. Gemäß der Protokollspezifikation des CAN dürfen andere Teilnehmerstationen so lange nicht auf den Kanal zugreifen, das heißt Daten an den Kanal senden, bis die sendende Teilnehmerstation ein Prüfsummenfeld (CRC-Feld) des Datenrahmens übertragen hat. Somit entspricht ein Endzeitpunkt der Übertragung des CRC-Felds einem Ende des Freigabeintervalls.

Durch die bitweise Arbitrierung wird eine zerstörungsfreie Übertragung des Datenrahmens über den Kanal erreicht. Hierdurch ergeben sich gute Echtzeiteigenschaften des CAN, wohingegen bei Medienzugriffssteuerverfahren, bei denen der von einer Teilnehmerstation gesendete Datenrahmen aufgrund einer Kollision mit einem von einer anderen Station gesendeten weiteren Datenrahmen während der Übertragung über den Kanal zerstört werden kann, ein deutlich ungünstigeres Echtzeitverhalten haben, da es aufgrund der Kollision und der dadurch erforderlichen neuen Übertragung des Datenrahmens zu einer Verzögerung der Datenübertragung kommt.

Eine weitere Verbesserung des Echtzeitverhaltens des CAN wird durch die Erweiterung TTCAN erreicht. Gemäß der Protokollspezifikation von TTCAN wird eine Zeitfensterstruktur definiert, die mehrere aufeinander folgende Zeitfenster (oftmals auch als "Zeitschlitze" oder time slots" bezeichnet) umfasst und sich regelmäßig wiederholt. Hierbei kann einem bestimmten Nachrichtentyp und somit einer bestimmten Teilnehmerstation ein bestimmtes Zeitfenster, innerhalb dessen Nachrichten dieses Nachrichtentyps übertragen werden dürfen, zugewiesen werden. Somit sind bei TTCAN bestimmte Zeitfenster vorgesehen, innerhalb denen eine bestimmte Station exklusiven Zugriff auf den Kanal einer CAN-Domäne hat. Bei TTCAN wird der Zugriff auf den Kanal zumindest teilweise nach dem Prinzip des zeitbasierten Vielfachzugriffs (Time Division Multiple Access, TDMA) koordiniert.

Die Protokolle des CAN beziehungsweise deren Erweiterung TTCAN eignen sich besonders zum Übertragen kurzer Meldungen unter Echtzeitbedingungen. Sollen jedoch größere Datenblöcke über eine CAN-Domäne übertragen werden, dann macht sich die relativ geringe Bitrate des Kanals störend bemerkbar. Um die korrekte Funktion der bitweisen Arbitrierung zu gewährleisten, muss für die Übertragung eines Bits eine insbesondere von der Ausdehnung des Bussystems und der Signalausbreitungsgeschwindigkeit auf dem Kanal abhängige Mindestdauer eingehalten werden. Somit kann die Bitrate durch Verringern der Dauer der einzelnen Bits nicht ohne weiteres erhöht werden.

Um dennoch einen für die Programmierung einer Steuereinheit benötigten relativ großen Datenblock über eine eigentlich für den Anschluss an eine CAN-Domäne vorgesehene Kommunikationsschnittstelle hinreichend schnell übertragen zu können, schlägt die DE 101 53 085 A 1 vor, die Kommunikationsschnittstelle zum Übertragen des Datenblocks vorübergehend in einen anderen Kommunikationsmodus umzuschalten, bei dem keine bitweise Arbitrierung durchgeführt wird und somit eine relativ hohe Bitrate möglich ist. Allerdings muss hierbei die Kommunikation mit den Protokollen des CAN für eine gewisse Zeit unterbrochen werden. Kann beispielsweise aufgrund eines Fehlers nicht mehr der Betrieb des Bussystems nach dem CAN-Protokollen aufgenommen werden, dann kommt es zu einem Ausfall des Bussystems. Zudem kommt es durch die Übertragung eines relativ großen Datenblocks zu einer erheblichen Verzögerung der nachfolgenden gemäß den Protokollen des CAN vorzunehmenden Übertragungen, so dass die Echtzeiteigenschaften des CAN beeinträchtigt werden. Ein Einsatz dieses Verfahrens nicht nur zur Programmierung der Steuereinheit am Ende eines Herstellungsprozesses eines Kraftfahrzeugs oder der Steuereinheit, sondern auch während des Betriebs des Kraftfahrzeugs ist somit nicht sinnvoll.

Die deutsche Offenlegungsschrift DE 103 01 637 A1 offenbart eine Sende-/Empfangseinrichtung, welche mehrere Sende- und/oder mehrere Empfangseinheiten beinhaltet, wobei jede Sende- bzw. Empfangseinheit zum Übertragen von Daten über einen separaten Kanal über das angeschlossene Kommunikations Netzwerk eingerichtet ist. Es werden verschiedene Möglichkeiten diskutiert, wie die verschiedenen Kanäle voneinander getrennt werden können. Eine kanalübergreifende Zugriffssteuerung wird nicht betrachtet.

Die internationale Offenlegungsschrift WO 2004/105278 A1 beschreibt ein zeitgesteuertes Kommunikationssystem mit wenigstens zwei Teilnehmerstationen, in welchen jeweils ein erster und zweiter Kommunikationscontroller zur Übertragung von Daten über einen ersten und zweiten Kanal vorgesehen sind und die beiden Kommunikationscontroller bzw. deren lokale Uhren durch eine geeignete Schnittstelle miteinander zum Zwecke der Synchronisierung kommunizieren können. Dadurch ist es möglich, eine Redundanz bei der Übertragung von sicherheitsrelevanten Informationen zu gewährleisten und gleichzeitig die zeitgesteuerte Kommunikation über beide Kanäle synchron zu halten. Von einer Erhöhung der Datenübertragungskapazität oder einer Übertragung unterschiedlicher Daten über beide Kanäle ist nicht die Rede. Die beiden Kanäle sind als physikalisch getrennte Kanäle vorgesehen.

Die internationale Offenlegungsschrift WO 2005/081463 A1 beschreibt ein Verfahren zur Übertragung von Informationen, bei welchem ein Teil der zyklisch über ein Bussystem übertragenen Daten zusätzlich über eine Versorgungsleitungsstruktur übertragen werden, um Redundanz darzustellen.

Aufgabe der Erfindung ist es somit, ein Verfahren für den Zugriff einer Teilnehmerstation eines Bussystems auf einen zweiten Kanal eines Bussystems parallel zu dem von mehreren Teilnehmerstationen gemeinsam genutzten ersten Kanal anzugeben, bei dem große Datenmengen relativ schnell übertragen werden können und Echtzeitbedingungen bei der Übertragung von Nachrichten über den Bus eingehalten werden können. Diese Aufgabe wird durch ein Datenubertragungsverfahren mit den Merkmalen des Anspruchs 1 gelöst.

Bei Realisierung des erfindungsgemäßen Verfahrens ist vorgesehen, eine 35 Hochfrequenz (HF)-Kommunikation über ein beliebiges Bussystem, beispielsweise einen CAN-Bus, mit einem beliebigen Zugriffsprotokoll durchzuführen. Dabei kann der Zugriff auf den von mehreren Teilnehmerstationen zur HF-Kommunikation genutzten zweiten Kanal nach einem beliebigen Zugriffsverfahren gesteuert werden. Über den ersten Kanal zu übertragende erste Daten und über den zweiten Kanal zu übertragende zweite Daten werden über eine gemeinsame Signalleitung übertragen. Es genügt also zwischen den einzelnen Teilnehmerstationen eine einzige Signalleitung beispielsweise in Form einer gemeinsamen Busleitung vorzusehen. Es ist denkbar, dass es sich hierbei um eine Busleitung eines bekannten Bussystems, insbesondere des CAN, handelt, über die Daten des ersten Kanals gemäß den Protokollen des CAN übertragen werden. Dies hat den Vorteil, dass herkömmliche Teilnehmerstationen, die beispielsweise die bekannten Protokolle des CAN beherrschen, problemlos an das Bussystem angeschlossen werden können, das mit dem erfindungsgemäßen Verfahren betrieben wird. Insofern handelt es sich bei dem vorgeschlagenen Verfahren um eine Erweiterung der Protokolle des CAN, die kompatibel zu den bekannten Protokollen und Geräten des CAN ist. Erfidungsgemäß ist vorgesehen, dass der Zugriff auf den zweiten Kanal derart gesteuert wird, dass der zweite Kanal nur innerhalb des Freigabeintervalls des ersten Kanals für den Zugriff durch die Teilnehmerstation freigegeben wird, wobei ein Beginn des Freigabeintervalls von der Teilnehmerstation mittels bitweiser Arbitrierung des ersten Kanals ermittelt wird.

Hierbei ist bevorzugt, dass in Abhängigkeit von den ersten Daten ein Datensignal und ein mit den zweiten Daten moduliertes Signal gebildet werden und dass das Datensignal mit dem modulierten Signal überlagert wird. Hierdurch wird die Übertragung der ersten Daten über den zweiten Kanal nicht durch die gleichzeitig ablaufende Übertragung der zweiten Daten über den zweiten Kanal gestört. Als Mödulationsverfähren zum Bilden des modulierten Signals kann beispielsweise eine Frequenzmodulation, insbesondere eine Frequenzumtastung in Abhängigkeit von einem logischen Zustand (0 oder 1) des zweiten Kanals, verwendet werden. Es ist auch denkbar, eine Phasenmodulation, beispielsweise eine binäre Phasenmodulation (Binary Phase Shift Keying, BPSK) vorzusehen.

In einer bevorzugten Ausführungsform ist vorgesehen, dass für den zweiten Kanal keine gesonderte Arbitrierung erforderlich ist. Eine Teilnehmerstation hat innerhalb des Freigabeintervalls den exklusiven Zugriff auf den ersten Kanal und sie greift nur dann auf den zweiten Kanal zu, wenn sie exklusiven Zugriff auf den ersten Kanal hat. Somit kann der zweite Kanal eine erheblich höhere Bitrate aufweisen als der erste Kanal. Die Teilnehmerstation kann einen relativ großen Datenblock über den zweiten Kanal übertragen, während sie exklusiven Zugriff auf den ersten Kanal hat. Das Bussystem weist vorzugsweise eine CAN-Domäne auf.

Es ist des weiteren besonders bevorzugt, dass als das mindestens eine Freigabeintervall ein Zeitfenster oder ein Teil des Zeitfensters innerhalb einer sich regelmäßig wiederholenden Zeitfensterstruktur vorgegeben wird. Für den Fall, dass das Bussystem eine CAN-Domäne aufweist, wird das Freigabeintervall beziehungsweise das Zeitfenster vorzugsweise mittels den Protokollen des TTCAN vorgegeben. Hierbei kann es sich bei dem Zeitfenster um einen Ausschnitt aus einen sich innerhalb eines Gesamtzyklus mehrmals wiederholenden Basiszyklus handeln. Da bei TTCAN ein Zeitfenster üblicherweise einem bestimmten Nachrichtentyp zugewiesen ist, werden einer einzigen Teilnehmerstation oftmals mehrere Zeitfenster und somit mehrere Freigabeintervalle innerhalb der Zeitfensterstruktur vorgegeben. Dies ist insbesondere dann der Fall, wenn diese Teilnehmerstation für das Versenden Nachrichten unterschiedlicher Nachrichtentypen zuständig ist, das heißt eine Informationsquelle für mehrere Nachrichtentypen bildet. Durch die Verwendung von TTCAN kann nicht nur eine störungsfreie Kommunikation zwischen mehreren Teilnehmerstationen über den zweiten Kanal sichergestellt werden, ohne dass hierfür ein gesondertes Arbitrierungsverfahren für den zweiten Kanal erforderlich wäre, sondern auch einzelnen Teilnehmerstationen ein bestimmter Anteil an der Kapazität des zweiten Kanals zugewiesen werden. Hierdurch kann für Übertragungen zwischen zwei bestimmten Teilnehmerstationen oder für Übertragungen von Nachrichten bestimmter Nachrichtentypen somit eine bestimmte mittlere Bitrate vorgegeben oder zugesichert werden.

Alternativ oder ergänzend hierzu kann vorgesehen werden, dass ein Beginn des Freigabeintervalls von der Teilnehmerstation mittels bitweiser Arbitrierung des ersten Kanals ermittelt wird und ein Ende des Freigabeintervalls vorgegeben wird, sobald die Teilnehmerstation nach erfolgreicher Arbitrierung des ersten Kanals diesen wieder freigibt. Hierdurch wird erreicht, dass der Zugriff auf den zweiten Kanal mittels der für den ersten Kanal vorgesehenen bitweisen Arbitrierung gesteuert wird. Im Falle einer CAN-Domäne kann vorgesehen werden, dass der Beginn des Freigabeintervalls dem Ende der Übertragung eines Arbitrierungsfelds eines Rahmens und das Ende des Freigabeintervalls einem Ende der Übertragung eines Prüfsummenfelds dieses Rahmens (CRC-Feld) entspricht.

Als weitere Lösung der oben genannten Aufgabe wird eine Teilnehmerstation eines Bussystems mit den Merkmalen des Anspruchs 6 vorgeschlagen. Über ein geeignetes Zugriffsverfahren wird beim Betrieb des Bussystems sichergestellt, dass es zu keiner Zerstörung der über den zweiten Kanal zu übertragenden Daten infolge von Kollisionen auf dem zweiten Kanal kommt. Die Teilnehmerstation weist ein zweites Steuerelement zum Steuern des Zugriffs auf den zweiten Kanal auf. Bei dem zweiten Steuerelement kann es sich um einen Kommunikationscontroller beliebiger Art handeln, der kein Protokoll zum Steuern des Zugriffs auf den zweiten Kanal ausführen muss. Der Kommunikationscontroller kann einfach als ein Controller zum Senden und Empfangen eines asynchronen seriellen Datenstroms realisiert werden. Die Teilnehmerstation weist ein Koppelelement auf, mit dem die beiden Steuerelemente mit einer gemeinsamen Signalleitung derart verbunden sind, dass die ersten Daten und die zweiten Daten über die gemeinsame Signalleitung zwischen verschiedenen Teilnehmerstationen übertragbar sind. Hierdurch wird eine einfache Leitungsführung zwischen den Teilnehmerstationen des Bussystems möglich.

Zur Vermeidung einer Zerstörung der über den zweiten Kanal zu übertragenden Daten infolge von Kollision auf dem zweiten Kanal kann ein beliebiges Medienzugriffssteuerverfahren oder -protokoll vorgesehen sein. Vorzugsweise wird jedoch vorgeschlagen, dass der Zugriff auf den zweiten Kanal derart gesteuert wird, dass der zweite Kanal nur innerhalb des Freigabeintervalls des ersten Kanals für den Zugriff durch die Teilnehmerstation freigegeben wird. Dadurch kann jede an das Bussystem angebundene Teilnehmerstation sicherstellen, dass zu jedem Zeitpunkt höchstens eine Teilnehmerstation auf den zweiten Kanal zugreift. Bei der Teilnehmerstation kann es sich beispielsweise um eine elektronische Komponente eines Kraftfahrzeugs, insbesondere um ein Steuergerät eines Kraftfahrzeugs handeln.

Um den Zugriff auf den zweiten Kanal ohne Verwendung eines gesonderten Medienzugriffssteuerverfahrens oder -protokolls koordinieren zu können, ist besonders bevorzugt, dass das zweite Steuerelement mit dem ersten Steuerelement derart gekoppelt ist, dass das zweite Steuerelement, vorzugsweise mittels eines von dem ersten Steuerelement erzeugten Zugriffssteuersignals, zum Freigeben des Zugriffs auf den zweiten Kanal steuerbar ist. Hierbei kann vorgesehen werden, dass das erste Steuerelement einen Ausgang zum Ausgeben des Zugriffssteuersignals und das zweite Steuerelement einen entsprechenden Steuereingang aufweist, der mit dem Ausgang verbunden ist.

Vorzugsweise ist die Teilnehmerstation zum Ausführen des erfindungsgemäßen Verfahrens eingerichtet, so dass sie dessen Vorteile realisiert.

Weitere Merkmale und Vorteile der Erfindung ergeben sich aus der nachfolgenden Beschreibung, in welcher exemplarische Ausführungsformen der Erfindung anhand der Zeichnung näher erläutert werden. Dabei zeigen:
- Figur 1: eine schematische Darstellung eines Bussystems mit mehreren Teilnehmerstationen;
- Figur 2: eine schematische Darstellung einer der Teilnehmerstationen aus Figur 1;
- Figur 3: eine schematische Darstellung eines Teils einer Teilnehmerstation aus Figur 1 gemäß einer bevorzugten Ausführungsform der Erfindung;
- Figur 4: einen zeitlichen Verlauf einer Belegung eines Kanals des Bussystems; und
- Figur 5: einen zeitlicher Verlauf der Kanalbelegung während der Übertragung eines Rahmens über den Kanal.

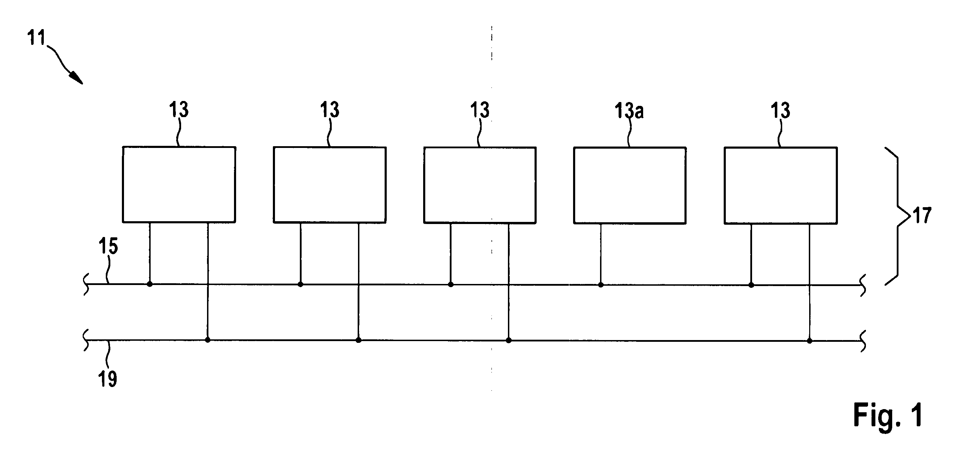

Figur 1 zeigt eine Übersicht über ein Bussystem 11 eines Kraftfahrzeugs, das mehrere Teilnehmerstationen 13, 13a und einen von diesen Teilnehmerstationen 13, 13a gemeinsam genutzten ersten Kanal 15 umfasst. In den gezeigten Ausführungsbeispielen bilden die Teilnehmerstationen 13, 13a und der erste Kanal 15 eine CAN-Domäne 17. Allerdings lässt sich die vorliegende Erfindung nicht nur auf CAN, sondern auch auf andere Arten von Kommunikationsnetzen anwenden. Dabei ist es vorteilhaft, jedoch nicht zwangsläufige Voraussetzung, wenn bei den verwendeten Kommunikationsnetzen zumindest für bestimmte Zeitspannen ein exklusiver, kollisionsfreier Zugriff einer Station auf einen gemeinsamen Kanal gewährleistet ist. Bei den Teilnehmerstationen 13, 13a kann es sich beispielsweise um Steuergeräte oder Anzeigevorrichtungen des Kraftfahrzeugs handeln.

Ein Teil der Teilnehmerstationen 13 ist an einen von diesem Teil der Teilnehmerstationen 13 gemeinsam genutzten zweiten Kanal 19 angeschlossen. Im gezeigten Ausführungsbeispiel sind alle Teilnehmerstationen 13 bis auf die Teilnehmerstation 13a an beide Kanäle 15, 19 angeschlossen. Bei dieser Teilnehmerstation 13a handelt es sich um eine herkömmliche Teilnehmerstation 13a, die zwar die Protokolle des CAN beherrscht, jedoch nicht zum Ausführen eines erfindungsgemäßen Verfahrens eingerichtet ist. Die anderen Teilnehmerstationen 13 sind gemäß der Erfindung um zusätzliche Funktionen erweitert, so dass sie zusätzlich über den zweiten Kanal 19 kommunizieren können. Bei dem in der Figur 1 gezeigten Bussystem 11 können somit herkömmliche Teilnehmerstationen 13a und die erweiterten Teilnehmerstationen 13 miteinander verbunden werden. Es können auch mehrere herkömmliche Teilnehmerstationen 13a in dem Bussystem vorgesehen werden; es ist jedoch auch denkbar, in dem Bussystem 11 lediglich die erweiterten Teilnehmerstationen 13 vorzusehen, welche an beide Kanäle 15, 19 angeschlossen sind.

Die vorliegende Erfindung wird nachfolgend anhand eines im CAN-Bus verwendeten Medienzugriffssteuerverfahren bzw. -protokoll erläutert. -Selbstverständlich ist die-Erfindung jedoch nicht auf solche Zugriffsverfahren beschränkt, sondern kann vielmehr mit beliebigen Medienzugriffssteuerverfahren und -protokollen verwendet werden.

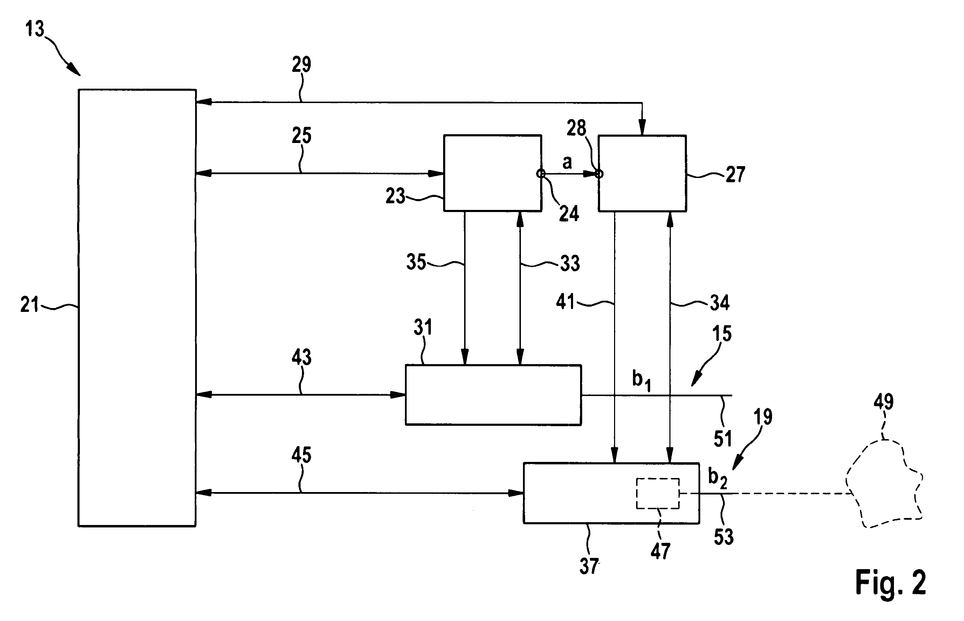

Figur 2 zeigt eine erweiterte Teilnehmerstation 13 im Detail. Diese Teilnehmerstation 13 weist einen Mikrocomputer 21 auf, der beispielsweise als ein Mikrocontroller ausgebildet sein kann. An den Mikrocomputer 21 ist ein erstes Steuerelement der Teilnehmerstation in Form eines CAN-Controllers 23 über eine erste Koppeleinrichtung 25 angebunden. Außerdem weist die Teilnehmerstation 13 ein zweites Steuerelement in Form eines Kommunikationscontrollers 27, der über eine zweite Koppeleinrichtung 29 mit dem Mikrocomputer 21 verbunden ist. Die beiden Koppeleinrichtungen 25, 29 sind zum Austausch von über das Bussystem 11 zu übertragenden Daten sowie von Konfigurations-, Steuer- und Statusinformationen zwischen dem Mikrocomputer 21 und den beiden Steuerelementen 23, 27 eingerichtet. Der Kommunikationscontroller 27 ist mit dem CAN-Controller 23 derart gekoppelt, dass der CAN-Controller mittels eines von ihm erzeugten Zugriffssteuersignals a den Kommunikationscontroller 27 steuern kann. Hierzu ist ein Steuereingang 28 des Kommunikationscontrollers 27 an einen Steuerausgang 24 des CAN-Controllers 23 angeschlossen.

Des Weiteren weist die Teilnehmerstation 13 eine erste Transceiver-Schaltung auf, die als ein CAN-Transceiver 31 ausgebildet ist. Der CAN-Transceiver 31 ist derart mit dem CAN-Controller 23 verbunden, dass über die CAN-Domäne 17, das heißt den ersten Kanal 15 zu übertragende erste Daten zwischen dem CAN-Controller 23 und dem CAN-Transceiver 31 ausgetauscht werden können (Pfeil 33). Des Weiteren ist der CAN-Transceiver 31 so an den CAN-Controller 23 angebunden, dass der CAN-Controller 23 Steuersignale an den CAN-Transceiver 31 übertragen kann (Pfeil 35). Der CAN-Transceiver 31 ist an den ersten Kanal 15 angeschlossen.

Ferner weist die Teilnehmerstation13 eine zweite Transceiver-Schaltung 37 auf, die an den Kommunikationscontroller 27 zum Übertragen von über die CAN-Domäne 17 auszutauschende erste Daten (Pfeil 39) sowie zum Übertragen von Steuersignalen (Pfeil 41) zwischen dem Kommunikationscontroller 27 und der zweiten Transceiver-Schaltung 37 angebunden. Die zweite Transceiver-Schaltung 37 ist an den zweiten Kanal 19 angeschlossen.

Außerdem können die beiden Transceiver-Schaltungen 31, 37 an den Mikrocomputer 21 angebunden sein, so dass der Mikrocomputer 21 die beiden Transceiver-Schaltungen 31, 37 steuern kann und Statusinformationen aus den beiden Transceiver-Schaltungen 31, 37 auslesen kann (siehe Pfeile 43 und 45). Eine solche Anbindung des Mikrocomputers 21 an die Transceiver-Schaltungen 31, 37 ist jedoch fakultativ, die Erfindung kann auch ohne eine solche Anbindung realisiert werden.

Für die genaue Ausgestaltung des Kommunikationscontrollers 27 und der zweiten Transceiver-Schaltung 37 bestehen hohe Freiheitsgrade. Es ist lediglich erforderlich, dass der Kommunikationscontroller 27 und die zweite Transceiver-Schaltung 37 eine Übertragungseinrichtung zum Übertragen von zweiten Daten zwischen den erweiterten Teilnehmerstationen 13 bereitstellt. Ein Protokoll zum Steuern des Medienzugriffs auf den zweiten Kanal (Media Access Control Protocol, MAC-Protokoll) muss über den zweiten Kanal 19 nicht ausgeführt werden. Bei der gezeigten Ausführungsform ist der Kommunikationscontroller 27 zum Senden und Empfangen eines asynchronen seriellen Datenstroms eingerichtet. Als zweite Transceiver-Schaltung 37 kann beispielsweise eine Transceiver-Schaltung, die eigentlich für CAN vorgesehen ist, eingesetzt werden. Da über den zweiten Kanal 19 kein Medienzugriffsverfahren und somit auch nicht die bitweise Arbitrierung des CAN ausgeführt werden muss, kann die zweite Transceiver-Schaltung 37 mit einer Bitrate betrieben werden, die höher ist, als die für den Betrieb der zweiten Transceiver-Schaltung gemäß den Protokollen des CAN zulässige Bitrate. Sind die beiden Transceiver-Schaltungen 31, 37 baugleich als CAN-Transceiver ausgebildet, dann kann der zweite Kanal 19 mit einer höheren Bitrate als der erste Kanal 15 betrieben werden. Die Bitrate des zweiten Kanals 19 kann beispielsweise 3 bis 4 Mbit/s betragen.

Soll eine noch höhere Bitrate für Datenübertragungen über den zweiten Kanal 19 vorgesehen werden, kann als zweite Transceiver-Schaltung 37 beispielsweise eine Transceiver-Schaltung für das Kommunikationssystem "FlexRay" oder für lokale Rechnernetze, wie beispielsweise "Ethernet" verwendet werden. Hierdurch kann beispielsweise eine Bitrate von 10 Mbit/s oder 100 Mbit/s auf dem zweiten Kanal 19 realisiert werden. Der zweite Kanal 19 kann als eine elektrische und/oder eine optische Verbindung zwischen den zweiten TransceiverSchaltungen 37 der Teilnehmerstationen 13 ausgebildet sein.

Des Weiteren kann der zweite Kanal auch von einem Bordnetz 49 eines Kraftfahrzeugs, in dem das Bussystem 11 eingebaut ist, gebildet sein ("Powerline-Communication", PLC). In diesem Fall weist die zweite Transceiver-Schaltung 37 ein PLC-Modem 47 auf, das mit dem Bordnetz 49 des Kraftfahrzeugs zum Übertragen der zweiten Daten über das Bordnetz 49 gekoppelt ist.

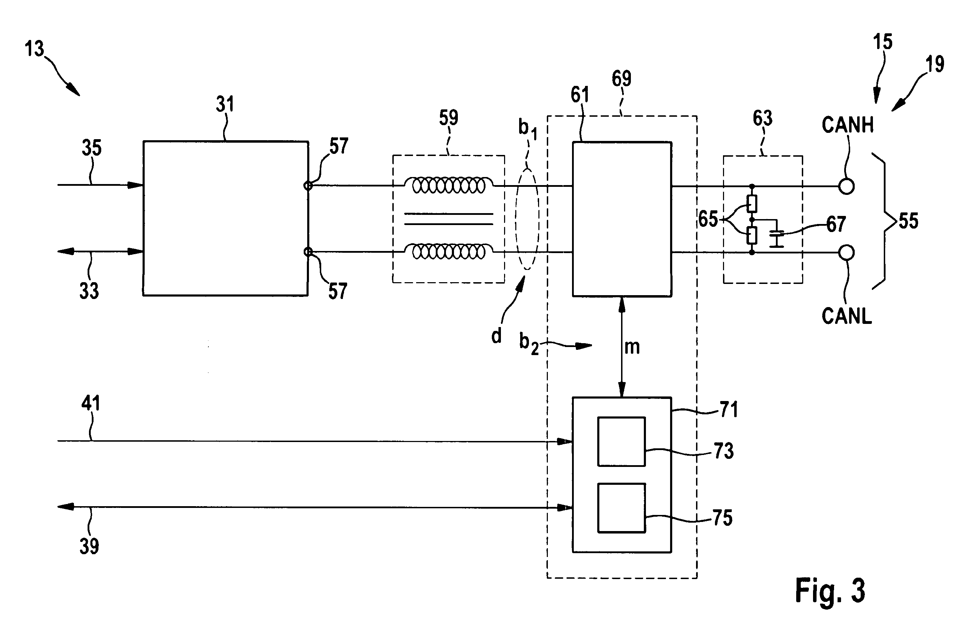

Bei dem in der Figur 2 gezeigten Ausführungsbeispiel ist der erste Kanal 15 von einer ersten Signalleitung 51 gebildet. Der zweite Kanal 19 wird durch eine von der ersten Signalleitung 51 getrennten zweiten Signalleitung 53 gebildet. Insofern ist das in Figur 2 dargestellte Ausführungsbeispiel nicht von dem Gegenstand der Ansprüche umfasst, da gemäß der vorliegenden Erfindung der erste Kanal 15 und der zweite Kanal 19 durch eine gemeinsame Signalleitung 55 (vgl. Figur 3) gebildet werden. Bis auf diesen Unterschied zur Erfindung gelten die bezüglich des Ausführungsbeispiels aus Figur 2 gemachten Ausführungen jedoch auch für die die vorliegende Erfindung.

Bei der ersten Signalleitung 51 handelt es sich beispielsweise um eine bei CAN übliche Zwei-Draht-Leitung zum differenziellen Übertragen von den über den ersten Kanal 15 zu übertragenden ersten Daten (in Figur 2 dargestellt als erster Bitstrom b₁). Die zweite Signalleitung 53 ist zum Übertragen von über den zweiten Kanal 19 zu übertragenden Daten, das heißt zum Übertragen eines zweiten Bitstroms b₂, eingerichtet. Die zweite Signalleitung 53 kann als eine weitere Zwei-Draht-Leitung zum differenziellen Übertragen der zweiten Daten b₂ bzw. des zweiten Bitstroms b₂ oder auf andere Weise ausgebildet sein.

In Figur 3 ist eine bevorzugte Ausführungsform der vorliegenden Erfindung dargestellt, bei der für die beiden Kanäle 15, 19 eine gemeinsame Signalleitung 55 vorgesehen ist. Die gemeinsame Signalleitung 55 umfasst ein Leiterpaar bestehend aus einem ersten Leiter CANH und einem zweiten Leiter CANL. In der gezeigten Ausführungsform handelt es sich bei der gemeinsamen Signalleitung 55 um eine herkömmliche für ein auf CAN basierendes Bussystem geeignete Busleitung.

Wie aus Figur 3 ersichtlich ist, ist auch bei einer Teilnehmerstation 13, die zum Anschluss an die gemeinsame Signalleitung 55 ausgelegt ist, der CAN-Transceiver 31 vorhanden. Dieser ist über die Leitungen 33, 35 an den CAN-Controller 23 angeschlossen. An zwei Busanschlüssen 57 des CAN-Transceivers 31 ist eine Gleichtaktdrossel 59 angeordnet. Zwischen der Gleichtaktdrossel 59 und dem Leiterpaar CANH, CANL der gemeinsamen Signalleitung 55 befindet sich ein Koppelelement 61. Das Koppelelement 61 kann auch mit der Gleichtaktdrossel 59 kombiniert werden, um die Hochfrequenz-Signale induktiv ein- bzw. auskoppeln zu können und den Hochfrequenz-Teil des Teilnehmers 13 galvanisch vom CAN-Bus 55 zu entkoppeln. Außerdem ist zwischen dem ersten Leiter CANH und dem zweiten Leiter CANL eine Busabschlussschaltung 63 angeordnet, die zwei in Serie geschaltete Abschlusswiderstände 65 aufweist, wobei die äußeren Enden dieser Serienschaltung an die Leiter CANH, CANL angeschlossen sind und ein Mittelabgriff dieser Serienschaltung über eine Kapazität 67 mit Masse verbunden ist. In einer nicht gezeigten Ausführungsform ist die Gleichtaktdrossel 59 und/oder die Busabschlussschaltung 63 nicht vorgesehen.

Das Koppelelement 61 gehört zu einer Anschlussschaltung 69 der Teilnehmerstation 13, die in der in Figur 3 gezeigten Ausführungsform anstelle der zweiten Transceiver-Schaltung 37 vorgesehen ist. Ein Modem 71 der Anschlussschaltung 69 kann einerseits mit dem Mikrocomputer 21 verbunden sein und ist andererseits an das Koppelelement 61 angeschlossen. Das Modem 71 weist einen Modulator 73 zum Erzeugen eines in Abhängigkeit von dem zweiten Bitstrom b₂ modulierten Signals m auf. Ferner weist das Modem 71 einen Demodulator 75 zum Demodulieren des von einer anderen Teilnehmerstation 13 über die gemeinsame Signalleitung 55 gesendeten modulierten Signals m auf.

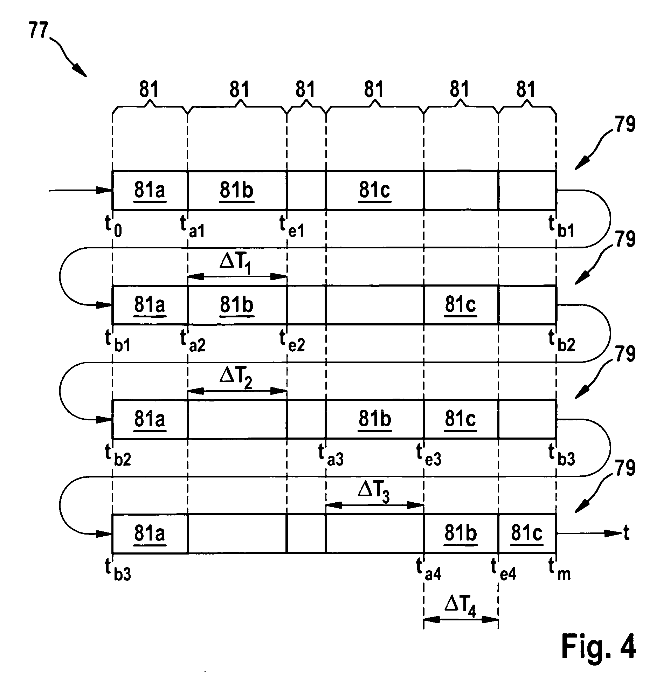

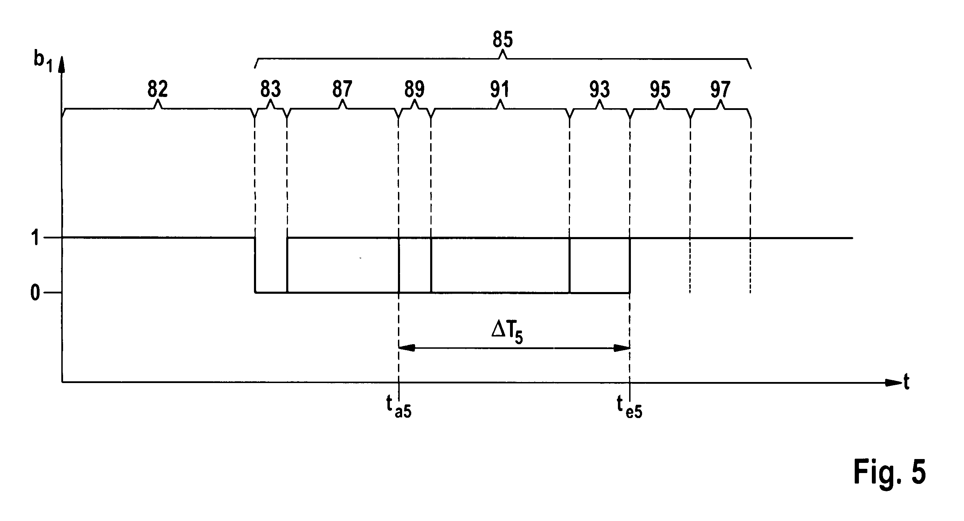

Im Folgenden wird anhand der Figuren 4 und 5 die Funktionsweise der Teilnehmerstationen 13 und des Bussystems 11 näher erläutert. Beim Betrieb des Bussystems 11 steuern die Mikrocomputer 21 der einzelnen Teilnehmerstationen 13 die einzelnen CAN-Controller 23 und CAN-Transceiver 31 so, dass gemäß den Protokollen des CAN zwischen den Teilnehmerstationen 13, 13a Nachrichten ausgetauscht werden können, indem Rahmen, die die Nachrichten enthalten, über den ersten Kanal 15 übertragen werden.

In der gezeigten Ausführungsform unterstützen die einzelnen Teilnehmerstationen 13 die Erweiterung TTCAN. Gemäß TTCAN wird die Zeit in sich regelmäßig wiederholende Gesamtzyklen unterteilt. Ein solcher Gesamtzyklus 77 ist in Figur 4 schematisch dargestellt. Der Gesamtzyklus 77 beginnt zum Zeitpunkt t₀ und endet zum Zeitpunkt tₘ. Man erkennt, dass der Gesamtzyklus 77 wiederum in mehrere Basiszyklen 79 unterteilt ist. Bei der gezeigten Ausführungsform ist der Gesamtzyklus 77 in vier Basiszyklen 79 unterteilt. Der erste Basiszyklus 79 (in Figur 4 oben eingezeichnet) beginnt zum Zeitpunkt t₀ und endet zu einem Zeitpunkt t_{b1}. Zu diesem Zeitpunkt t_{b1} beginnt auch der auf den ersten Basiszyklus 79 folgende zweite Basiszyklus 79, der zu einem Zeitpunkt t_{b2} endet. In entsprechender Weise beginnt der dritte Basiszyklus zum Zeitpunkt t_{b2} und endet zu einem Zeitpunkt t_{b3}. Der vierte Basiszyklus beginnt zum Zeitpunkt t_{b3} und endet zu dem Zeitpunkt tₘ und beendet somit den Gesamtzyklus 77.

Die einzelnen Basiszyklen 79 sind in mehrere, in der gezeigten Ausführungsform in sechs Zeitfenster 81 unterteilt, wobei die Unterteilung der Basiszyklen 79 in die Zeitfenster 81 für jeden Basiszyklus 79 identisch ist. Durch die Gesamtzyklen 77 wird eine sich regelmäßig wiederholende Zeitfensterstruktur definiert, die aufgrund der identischen Unterteilung der einzelnen Basiszyklen 79 in die Zeitfenster 81 einen matrixartigen Aufbau aufweist und somit üblicherweise als Kommunikationsmatrix bezeichnet wird.

Ein erstes Zeitfenster 81a ist für die Übertragung von Referenznachrichten über den ersten Kanal 15 vorgesehen. Die Referenznachrichten dienen insbesondere zur Synchronisation der einzelnen Teilnehmerstationen 13 untereinander, so dass die zeitliche Lage der einzelnen Zeitfenster 81 aus Sicht der einzelnen Teilnehmerstationen 13 zumindest im Wesentlichen gleich ist. Ein Teil der Zeitfenster 81 ist einem bestimmten Nachrichtentyp zugewiesen, das heißt innerhalb dieser Zeitfenster 81 werden ausschließlich Datenrahmen mit einer bestimmten Kennung übertragen. Es kann beispielsweise vorgesehen werden, dass die mit 81 b bezeichneten Zeitfenster 81 zum Übertragen der Nachricht des bestimmten Typs reserviert sind.

Da bei CAN eine Nachricht eines bestimmten Typs, das heißt mit einer bestimmten Kennung, nur von einer Teilnehmerstation 13 erzeugt werden kann, sind die Zeitfenster 81 b dieser Teilnehmerstation 13 exklusiv zugewiesen. Das heißt, zu einem Anfangszeitpunkt tₐ₁, tₐ₂, tₐ₃ beziehungsweise tₐ₄ beginnt ein - Freigabeintervall ΔT₁, ΔT₂, ΔT₃ beziehungsweise ΔT₄, innerhalb dessen diese Teilnehmerstation 13 exklusiven Zugriff auf den ersten Kanal 15 hat. Das Freigabeintervall ΔT₁, ΔT₂, ΔT₃ beziehungsweise ΔT₄ endet jeweils am Ende des zugehörigen Zeitfensters 81 b, das heißt zu dem Zeitpunkt te₁, tₑ₂, tₑ₃ beziehungsweise tₜₑ₄. In der gezeigten Ausführungsform entspricht das Freigabeintervall ΔT₁, ΔT₂, ΔT₃ beziehungsweise ΔT₄ dem jeweiligen Zeitfenster 81 b des Gesamtzyklusses. Abweichend hiervon kann jedoch auch vorgesehen werden, dass das Freigabeintervall lediglich ΔT₁, ΔT₂, ΔT₃ beziehungsweise ΔT₄ einem Teil des jeweiligen Zeitfensters 81 b entspricht. Wesentlich für die Funktion des erfindungsgemäßen Verfahrens ist, dass das das Freigabeintervall ΔT₁, ΔT₂, ΔT₃ beziehungsweise ΔT₄ in zeitlicher Hinsicht vollständig von einem Zeitfenster 81 b oder von mehreren unmittelbar aufeinander folgenden Zeitfenster 81 b abgedeckt wird.

Jede Teilnehmerstation 13 erfasst die Zeitpunkte t₀, t_{b1}, t_{b2}, t_{b3}, zu denen die einzelnen Referenznachrichten empfangen werden und berechnet die zeitliche Lage zumindest derjenigen Zeitfenster 81, innerhalb denen sie auf den Bus zugreifen möchte. Die Teilnehmerstation 13, die zum Versenden derjenigen Nachrichten zuständig ist, denen das Zeitfenster 81 b zugewiesen ist, berechnet die Lage des in Figur 4 eingezeichneten Freigabeintervalls ΔT₁, ΔT₂, ΔT₃ beziehungsweise ΔT₄. In der gezeigten Ausführungsform nimmt der CAN-Controller 23 diese Berechnungen vor. Es kann jedoch auch vorgesehen werden, dass diese Berechnungen vom Mikrocomputer 21 durchgeführt werden. Ferner erzeugt der CAN-Controller 23 das Zugriffssteuersignal a und leitet dies dem Kommunikationscontroller 27 zu (siehe Figur 2). Das Zugriffssteuersignal a ist immer innerhalb des Freigabeintervalls ΔT₁, ΔT₂, ΔT₃ beziehungsweise ΔT₄ aktiv. Der Kommunikationscontroller 27 wertet das Zugriffssteuersignal a aus und greift nur dann auf den zweiten Kanal 19 zu, wenn das Zugriffssteuersignal a aktiv ist. Ist das Zugriffssteuersignal a nicht aktiv, dann hält der Kommunikationscontroller 27 den zweiten Kanal 19 frei, so dass andere Teilnehmerstationen 13 auf den zweiten Kanal 19 zugreifen können. Die Teilnehmerstationen 13 sind also so eingerichtet, dass der CAN-Controller 23 in Abhängigkeit von dem in CAN-Domäne ausgeführten Zugriffssteuerungsverfahren den Kommunikationscontroller 27 derart steuert, dass der Kommunikationscontroller 27 auf den zweiten Kanal 19 nur dann zugreift, wenn gemäß dem Medienzugriffsteuerungsverfahren der CAN-Domäne 17 auch ein Zugriff auf den ersten Kanal 15 erlaubt ist.

Ferner sind innerhalb des Gesamtzyklus 77 weitere Zeitfenster 81c vorgesehen, innerhalb derer Nachrichten eines beliebigen Typs übertragen werden dürfen. Innerhalb dieser Zeitfenster 81 c ist der exklusive Zugriff einer bestimmten Station auf den ersten Kanal nicht garantiert. Deshalb wird innerhalb der Zeitfenster 81 c eine bitweise Arbitrierung gemäß den Protokollen des CAN durchgeführt. Die bitweise Arbitrierung beruht darauf, dass für den Fall, dass mehrere Teilnehmerstationen 13 gleichzeitig auf den ersten Kanal 15 zugreifen und Bits mit verschiedenen Werten senden, von allen Stationen stets ein Bit mit einem bestimmten Wert empfangen wird. Der Wert dieses Bits wird als "dominantes Bit" bezeichnet und entspricht im gezeigten Beispiel dem Wert 0. Ferner ist die erste Signalleitung 51 so aufgebaut, dass jede Teilnehmerstation 13 über ihren CAN-Transceiver 31 während sie auf den ersten Kanal 15 zugreift empfangen kann. Somit kann jede Teilnehmerstation 13 während sie zum Senden eines Bits auf den ersten Kanal 15 zugreift, den momentanen Zustand des ersten Kanals 15 lesen, um festzustellen, ob dieser Zustand dem gesendeten Bit entspricht.

Figur 5 zeigt einen Ausschnitt eines zeitlichen Verlaufs des logischen Zustands (Wert 0 oder 1) des ersten Kanals 15 innerhalb des Zeitfensters 81c. Nach einer Leerlaufzeit 82, in welcher der erste Kanal 15 von keiner Teilnehmerstation 13 belegt war, beginnt eine betrachtete Teilnehmerstation 13 ein Startbit 83 eines Rahmens 85 zu senden. Nach Übertragung des Startbits 83 sendet die Teilnehmerstation 13 ein Arbitrierungsfeld 87, das insbesondere die Kennung der Nachricht, die den Typ der Nachricht anzeigt, enthält. Während der Übertragung des Arbitrierungsfelds 87 vergleicht die Teilnehmerstation 13 den logischen Zustand des ersten Kanals 15 mit dem jeweils gesendeten Bit des Arbitrierungsfelds 87. Stellt die Teilnehmerstation 13 während der Übertragung des Arbitrierungsfelds 87 fest, dass der erfasste Zustand des ersten Kanals nicht dem gesendeten Bit entspricht, dann bricht die Teilnehmerstation 13 die Übertragung des Rahmens 85 ab. Somit ist sichergestellt, dass nach der Übertragung des Arbitrierungsfelds 87 zu einem Zeitpunkt tₐ₅ eine Teilnehmerstation 13 exklusiven Zugriff auf den ersten Kanal 15 hat. Alle anderen Stationen, die gleichzeitig auf den ersten Kanal 15 zugegriffen haben, um einen Rahmen 85 zu übertragen, haben zum Zeitpunkt tₐ₅ ihre Übertragung und somit ihren Zugriff auf den ersten Kanal 15 abgebrochen. Somit entspricht der Zeitpunkt tₐ₅ dem Beginn eines weiteren Freigabeintervalls ΔT₅. Nach dem Senden des Arbitrierungsfelds 87 sendet die Teilnehmerstation 13 ein Steuerfeld 89 des Rahmens 85, ein Datenfeld 91 des Rahmens 85 sowie ein Prüffeld 93 (sog. CRC-Feld).

In einem auf das Prüffeld 93 folgenden Quittierungsfeld 95 können andere Teilnehmerstationen 13 ein Quittierungsbit über den ersten Kanal 15 übertragen, das heißt auf den ersten Kanal 15 zugreifen. Somit endet das Freigabeintervall ΔT₅, innerhalb dessen die betrachtete Teilnehmerstation 13 exklusiven Zugriff auf den ersten Kanal 15 hat, zum Ende der Übertragung des Prüffelds 93, das heißt zu einem Zeitpunkt tₑ₅. Auf das Quittierungsfeld 95 folgt ein Feld mit Stoppbits 97. Abweichend von der gezeigten Ausführungsform, kann das Freigabeintervall auch kürzer gewählt werden; es muss jedoch innerhalb des Intervalls ΔT₅ liegen, in welchem die Teilnehmerstation 13 den exklusiven Zugriff auf den ersten Kanal 15 hat.

Während den Zeitfenstern 81 c sorgt der CAN-Controller 23 dafür, dass das Zugriffssteuersignal a nur während des Freigabeintervalls ΔT₅ aktiv ist, so dass der Kommunikationscontroller 27 innerhalb der Zeitfenster 81 c nur während des Freigabeintervalls ΔT₅ auf den zweiten Kanal 19 zugreift.

Abweichend von der gezeigten Ausführungsform kann auch vorgesehen werden, dass der CAN-Controller 23 das Freigabesignal a zum Freigeben des Zugriffs auf den zweiten Kanal 19 nur innerhalb solcher Zeitfenster 81, die zum Übertragen von Nachrichten eines bestimmten Typs freigibt, das heißt beispielsweise innerhalb der Zeitfenster 81b. Während diejenigen Zeitfenster (z. B. die Zeitfenster 81c), die zum Übertragen Nachrichten unterschiedlichen Typs verwendet werden, das heißt innerhalb deren die bitweise Arbitrierung stattfindet, wird bei dieser Ausführungsform der zweite Kanal 19 nicht genutzt. Es ist auch denkbar, dass ein Zugriff auf den zweiten Kanal während des Intervalls ΔT₅ nur dann freigegeben wird, wenn TTCAN beispielsweise wegen eines Fehlers in der CAN-Domäne 17 nicht verfügbar ist. Hierdurch wird ein Notlauf des Bussystems 11, insbesondere des zweiten Kanals 19 bei nicht verfügbarem TTCAN, das heißt bei fehlender Zeitfensterstruktur 77 ermöglicht.

Weiter kann vorgesehen werden, dass die Erfindung auf eine CAN-Domäne 17 angewendet wird, die die Erweiterung TTCAN nicht unterstützt. Bei einer solchen CAN-Domäne 17 fehlt die Zeitfensterstruktur 77. Somit findet dort stets eine bitweise Arbitrierung statt. Bei einer solchen CAN-Domäne 17 wird der Zugriff auf den zweiten Kanal 19 während des in Figur 5 eingezeichneten Freigabeintervalls ΔT₅ freigegeben.

Ist das Zugriffssteuersignal a aktiv, das heißt der Zugriff auf den zweiten Kanal 19 freigegeben, dann gibt im Falle der in Figur 2 gezeigten Ausführungsform die zweite Transceiver-Schaltung 37 den zweiten Bitstrom b₂ aus. Wird die zweite Signalleitung 53 durch das Bordnetz 49 gebildet, dann moduliert bei der sendenden Teilnehmerstation 13 das PLC-Modem 47 den Bitstrom b₂ und gibt ein entsprechend moduliertes Signal an das Bordnetz 49 ab. Bei den empfangenden Teilnehmerstationen 13 demoduliert das PLC-Modem 47 das von der sendenden Teilnehmerstation 13 abgegebene modulierte Signal und rekonstruiert dadurch den gesendeten Bitstrom b₂ und gibt die im zweiten Bitstrom b₂ enthaltenen zweiten Daten an den Kommunikationscontroller 27 weiter.

Bei der in der Figur 3 gezeigten Ausführungsform erzeugt der Modulator 73 des Modems 71 der sendenden Teilnehmerstation 13 in Abhängigkeit von den zweiten Daten b₂, die der Kommunikationscontroller 27 an die Anschlussschaltung 69 übermittelt hat, das modulierte Signal m. Das Koppelelement 61 überlagert ein vom CAN-Transceiver 31 in Abhängigkeit von dem ersten Bitstrom b₁ erzeugtes Datensignal d mit dem in Abhängigkeit von dem zweiten Bitstrom b₂ modulierten Signal m und gibt es an die beiden Leiter CANH und CANL der gemeinsamen Signalleitung 55 aus. Bei den empfangenden Teilnehmerstationen 13 gibt das Koppelelement 61 ein über die beiden Leiter CANH und CANL empfangenes Signal über die wahlweise vorhandene Gleichtaktdrossel 59 an den CAN- Transceiver 31 weiter und führt es dem Demodulator 75 des Modems 71 zu. Der CAN-Transceiver 31 extrahiert aus dem empfangenen Signal den ersten Bitstrom b₁ und gibt diesen an den CAN-Controller 23 weiter. In entsprechender Weise ermittelt der Demodulator 75 aus dem empfangenen Signal den zweiten Bitstrom b₂. Dadurch, dass die wahlweise vorhandene Gleichtaktdrossel 59 zwischen dem CAN-Transceiver 31 und dem Koppelelement 61 angeordnet ist, wird vermieden, dass die Gleichtaktdrossel 59 das modulierte Signal m innerhalb eines Signalpfades zwischen den Modems 71 zweier an die gemeinsame Signalleitung 55 angeschlossener Teilnehmerstationen 13 dämpft.

In der gezeigten Ausführungsform verwendet das Modem 71 als Modulationsverfahren eine Frequenzumtastung in Abhängigkeit des Werts der einzelnen zeitlich aufeinanderfolgenden Bits des zweiten Bitstroms b₂.

Abweichend hiervon kann anstelle der Frequenzumtastung auch eine Phasenmodulation oder ein beliebig anderes Modulationsverfahren angewendet werden.

Das Koppelelement 61 kann im einfachsten Fall als ein Widerstandsnetzwerk ausgebildet sein. Es kann jedoch auch vorgesehen werden, dass das Koppelelement 61 ein oder mehrere Filter zum Trennen des dem CAN-Transceiver 31 zuzuführenden Datensignal d vom modulierten Signal m aufweist. Des weiteren wäre es denkbar, dass das Koppelelement 61 mit der Gleichtaktdrossel 59 kombiniert wird, für die Gleichtaktdrossel 59 also statt einer einfachen Induktivität mit vier Anschlüssen eine Induktivität mit sechs oder mehr Anschlüssen verwendet wird. Auf diese Weise kann das HF-Signal induktiv ein- bzw. ausgekoppelt werden und der HF-Teil ist galvanisch vom CAN-Bus entkoppelt. Außerdem ergeben sich dadurch Kostenvorteile.

Insgesamt stellt die vorliegende Erfindung ein Verfahren und eine Teilnehmerstation 13 bereit, die es ermöglicht, die Nutzbitrate der CAN-Domäne 17 mittels des zusätzlichen, zweiten Kanals 19 erheblich zu erhöhen, so dass größere Datenblöcke über das Bussystem 11 problemlos übertragen werden können. Da der Zugriff auf den zweiten Kanal 19 in Abhängigkeit von der Medienzugriffssteuerung der CAN-Domäne 17 gesteuert werden kann, können Kollisionen, das heißt Störungen in Folge unbeabsichtigten zeitgleichen Zugreifens mehrerer Teilnehmerstationen 13 auf den zweiten Kanal 19, vermieden werden. Somit ergibt sich ein Bussystem 11, das die in der Kraftfahrzeugtechnik auftretenden Echtzeitbedingungen einhalten kann, Übertragungen mit relativ hohen Bitraten ermöglicht und trotzdem kostengünstig realisiert werden kann.

## Patentansprüche

1. Verfahren zum Übertragen von Daten (b1) zwischen Teilnehmerstationen (13) eines Bussystems (11) über einen von mehreren Teilnehmerstationen (13) gemeinsam genutzten ersten Kanal (15) des Bussystems (11), wobei Daten (b2) zusätzlich zu dem ersten Kanal (15) auch über einen von mehreren Teilnehmerstationen (13) genutzten zweiten Kanal (19) übertragen werden, wobei über den ersten Kanal (15) zu übertragende erste Daten (b1) und über den zweiten Kanal (19) zu übertragende zweite Daten (b2) über eine gemeinsame Signalleitung (55) übertragen werden,
**dadurch gekennzeichnet, dass** der Zugriff auf den zweiten Kanal (19) derart gesteuert wird, dass der zweite Kanal (19) nur innerhalb des Freigabeintervalls (ΔT₁, ΔT₂, ΔT₃, ΔT₄, ΔT₅) des ersten Kanals (15) für den Zugriff durch die Teilnehmerstation (13) freigegeben wird,
wobei ein Beginn (tₐ₁ t_{a2,} tₐ₃, tₐ₄, tₐ₅) des Freigabeintervalls (ΔT₁, ΔT₂, ΔT₃, ΔT₄, ΔT₅) von-der Teilnehmerstation (13) mittels bitweiser Arbitrierung des ersten Kanals (15) ermittelt wird.

2. Verfahren nach Anspruch 1, **dadurch gekennzeichnet, dass** in Abhängigkeit von den ersten Daten (b₁) ein Datensignal (d) und ein mit den zweiten Daten (b₂) moduliertes Signal (m) gebildet wird und dass das Datensignal (d) mit dem modulierten Signal (m) überlagert wird.

3. Verfahren nach Anspruch 1 oder 2, **dadurch gekennzeichnet, dass** als das mindestens eine Freigabeintervall (ΔT₁, ΔT₂, ΔT₃, ΔT₄, ΔT₅) ein Zeitfenster (81b) oder ein Teil des Zeitfensters (81b) innerhalb einer sich regelmäßig wiederholenden Zeitfensterstruktur (77) vorgegeben wird.

4. Verfahren nach einem der Ansprüche 1 bis 3, **dadurch gekennzeichnet, dass** ein Ende (tₑ₁, tₑ₂, tₑ₃, tₑ₄, tₑ₅) des Freigabeintervalls (ΔT_{1,} ΔT₂, ΔT₃, ΔT₄, ΔT₅) vorgegeben wird, sobald die Teilnehmerstation (13) nach erfolgreicher Arbitrierung des ersten Kanals (15) diesen wieder freigibt.

5. Teilnehmerstation (13) eines Bussystems (11), mit einem ersten Steuerelement (23) zum Steuern eines Zugriffs der Teilnehmerstation (13) auf einen von mehreren Teilnehmerstationen (13) gemeinsam genutzten ersten Kanal (15) des Bussystems (11), wobei die Teilnehmerstation (13) zusätzlich zu dem ersten Steuerelement (23) auch ein zweites Steuerelement (27) zum Steuern eines Zugriffs der Teilnehmerstation (13) auf einen von mehreren Teilnehmerstationen (13) genutzten zweiten Kanal (19) aufweist und dass die Teilnehmerstation (13) ein Koppelelement (61) aufweist, mit dem die beiden Steuerelemente (23, 27) mit einer gemeinsamen Signalleitung (55) derart verbunden sind, dass über den ersten Kanal (15) zu übertragende erste Daten (bi) und über den zweiten Kanal (19) zu übertragende zweite Daten (b2) über die gemeinsame Signalleitung (55) zwischen verschiedenen Teilnehmerstationen (13) übertragbar sind,
**dadurch gekennzeichnet, dass** das erste Steuerelement (23) zum Steuern eines Zugriffs der Teilnehmerstation (13) auf den zweiten Kanal (19) derart eingerichtet ist, dass der zweite Kanal (19) nur innerhalb des Freigabeintervalls (ΔT₁, ΔT₂, ΔT₃, ΔT₄, ΔT₅) für den Zugriff durch die Teilnehmerstation (13) freigegeben ist,
wobei ein Beginn (tₐ₁, tₐ₂, tₐ₃, tₐ₄, tₐ₅) des Freigabeintervalls (ΔT₁, ΔT₂, ΔT₃, ΔT₄, ΔT₅) von der Teilnehmerstation (13) mittels bitweiser Arbitrierung des ersten Kanals (15) ermittelt wird.

6. Teilnehmerstation (13) nach Anspruch 5, **dadurch gekennzeichnet, dass** das Koppelelement (61) mit einer Gleichtaktdrossel (59) derart kombiniert ist, dass ein die ersten Daten (b₁) und die zweiten Daten (b₂) umfassendes Hochfrequenzsignal induktiv ein- bzw. auskoppelbar ist.

7. Teilnehmerstation (13) nach einem der Ansprüche 5 bis 6, **dadurch gekennzeichnet, dass** das zweite Steuerelement (27) mit dem ersten Steuerelement (23) derart gekoppelt ist, dass das zweite Steuerelement (27), vorzugsweise mittels eines von dem ersten Steuerelement (23) erzeugten Zugriffssteuersignals (a), zum Freigeben des Zugriffs auf den zweiten Kanal (19) steuerbar ist.

8. Teilnehmerstation (13) nach einem der Ansprüche 5 bis 7, **dadurch gekennzeichnet, dass** die Teilnehmerstation (13) zum Ausführen des Verfahrens nach einem der Ansprüche 1 bis 4 eingerichtet ist.

## Claims

1. Method for transmitting data (b1) between subscriber stations (13) in a bus system (11) via a first channel (15), that is used jointly by a plurality of subscriber stations (13), in the bus system (11), wherein data (b2) are also transmitted via a second channel (19), that is used by a plurality of subscriber stations (13), in addition to the first channel (15), wherein first data (b1) to be transmitted via the first channel (15) and second data (b2) to be transmitted via the second channel (19) are transmitted via a shared signal line (55),
**characterized in that** the access to the second channel (19) is controlled such that the second channel (19) is cleared for access by the subscriber station (13) only within the clearance interval (ΔT₁, AT₂, ΔT₃, ΔT₄, ΔT₅) of the first channel (15),
with a beginning (tₐ₁, tₐ₂, tₐ₃, tₐ₄ tₐ₅) of the clearance interval (ΔT₁, ΔT₂, ΔT₃, ΔT₄, ΔT₅) being ascertained by the subscriber station (13) by means of bit-by-bit arbitration of the first channel (15).

2. Method according to Claim 1, **characterized in that** the first data (b₁) are taken as a basis for forming a data signal (d) and a signal (m) that is modulated with the second data (b₂), and **in that** the data signal (d) is overlaid with the modulated signal (m).

3. Method according to Claim 1 or 2, **characterized in that** the at least one clearance interval (ΔT₁, ΔT₂, ΔT₃, ΔT₄, ΔT₅) prescribed is a time window (81b) or a portion of the time window (81b) within a regularly repeating time window structure (77).

4. Method according to one of Claims 1 to 3, **characterized in that** an end (tₑ₁, tₑ₂, tₑ₃, tₑ₄, tₑ₅) of the clearance interval (ΔT₁, ΔT₂, ΔT₃, ΔT₄, ΔT₅) is prescribed as soon as the subscriber station (13) clears the first channel (15) again following successful arbitration of said channel.

5. Subscriber station (13) in a bus system (11), having a first control element (23) for controlling access by the subscriber station (13) to a first channel (15), that is used jointly by a plurality of subscriber stations (13), in the bus system (11), wherein the subscriber station (13) also has, in addition to the first control element (23), a second control element (27) for controlling access by the subscriber station (13) to a second channel (19) that is used by a plurality of subscriber stations (13), and wherein the subscriber station (13) has a coupling element (61) by means of which the two control elements (23, 27) are connected to a shared signal line (55) such that first data (b1) to be transmitted via the first channel (15) and second data (b2) to be transmitted via the second channel (19) can be transmitted between different subscriber stations (13) via the shared signal line (55),
**characterized in that** the first control element (23) is set up to control access by the subscriber station (13) to the second channel (19) such that the second channel (19) is cleared for access by the subscriber station (13) only within the clearance interval (ΔT₁, ΔT₂, ΔT₃, Δ_{T4}, ΔT₅),
with a beginning (tₐ₁, tₐ₂, tₐ₃, tₐ₄ tₐ₅) of the clearance interval (ΔT₁, ΔT₂, ΔT₃, ΔT₄, ΔT₅) being ascertained by the subscriber station (13) by means of bit-by-bit arbitration of the first channel (15).

6. Subscriber station (13) according to Claim 5, **characterized in that** the coupling element (61) is combined with a common-mode inductor (59) such that a radio-frequency signal comprising the first data (b1) and the second data (b2) can be inductively coupled in or out.

7. Subscriber station (13) according to either of Claims 5 and 6, **characterized in that** the second control element (27) is coupled to the first control element (23) such that the second control element (27) can be controlled to clear access to the second channel (19), preferably by means of an access control signal (a) produced by the first control element (23).

8. Subscriber station (13) according to one of Claims 5 to 7, **characterized in that** the subscriber station (13) is set up to carry out the method according to one of Claims 1 to 4.

## Revendications

1. Procédé de transmission de données (b1) entre des stations d'abonnés (13) d'un système de bus (11) par l'intermédiaire d'un premier canal (15) du système de bus (11) utilisé en commun par plusieurs stations d'abonnés (13), des données (b2) étant également transmises en plus du premier canal (15) par l'intermédiaire d'un second canal (19) utilisé par plusieurs stations d'abonnés (13), des premières données (b1) devant être transmises par l'intermédiaire du premier canal (15) et des secondes données (b2) devant être transmises par l'intermédiaire du second canal (19) étant transmises par l'intermédiaire d'une ligne de signal commune (55),
**caractérisé en ce que** l'accès au second canal (19) est commandé de telle manière que le second canal (19) ne soit libéré qu'au cours de l'intervalle de libération (ΔT₁, ΔT₂, ΔT₃, ΔT₄, ΔT₅) du premier canal (15) pour l'accès par l'intermédiaire de la station d'abonné (13), un début (ta₁, ta₂, ta₃, ta₄, ta₅) de l'intervalle de libération (ΔT₁, ΔT₂, ΔT₃, ΔT₄, ΔT₅) étant déterminé par la station d'abonné (13) au moyen d'un arbitrage bit par bit du premier canal (15).

2. Procédé selon la revendication 1, **caractérisé en ce qu'**un signal de données (d) et un signal (m) modulé par les secondes données (b₂) sont formés en fonction des premières données (b₁) et **en ce que** le signal de données (d) est superposé au signal modulé (m).

3. Procédé selon la revendication 1 ou 2, **caractérisé en ce qu'**une fenêtre temporelle (81b) ou une partie de la fenêtre temporelle (81b) est prédéterminée en tant que ledit au moins un intervalle de libération (ΔT₁, ΔT₂, ΔT₃, ΔT₄, ΔT₅) dans une structure de fenêtre temporelle (77) se répétant régulièrement.

4. Procédé selon l'une quelconque des revendications 1 à 3, **caractérisé en ce qu'**une fin (tₑ₁, tₑ₂, tₑ₃, tₑ₄, tₑ₅) de l'intervalle de libération (ΔT₁, ΔT₂, ΔT₃, ΔT₄, ΔT₅) est déterminée dès que la station d'abonné (13) libère de nouveau le premier canal (15) après un arbitrage réussi de celui-ci.

5. Station d'abonné (13) d'un système de bus (11), comprenant un premier élément de commande (23) destiné à commander l'accès de la station d'abonné (13) à un premier canal (15) du système de bus (11) utilisé en commun par plusieurs stations d'abonnés (13), la station d'abonné (13) comprenant également, en plus du premier élément de commande (23), un second élément de commande (27) destiné à commander un accès de la station d'abonné (13) à un second canal (19) utilisé par plusieurs stations d'abonnés (13) et la station d'abonné (13) comprenant un élément de couplage (61) au moyen duquel les deux éléments de commande (23, 27) sont connectés à une ligne de signal commune (55) de telle manière que des premières données (b1) devant être transmises par l'intermédiaire du premier canal (15) et des secondes données (b2) devant être transmises par l'intermédiaire du second canal (19) puissent être transmises par l'intermédiaire de la ligne de signal commune (55) entre différentes stations d'abonnés (13),
**caractérisée en ce que** le premier élément de commande (23) est conçu pour commander un accès de la station d'abonné (13) au second canal (19) de telle manière que le second canal (19) ne soit libéré qu'au cours de l'intervalle de libération (ΔT₁, ΔT₂, ΔT₃, ΔT₄, ΔT₅) pour l'accès par l'intermédiaire de la station d'abonné (13),
un début (tₐ₁, tₐ₂, tₐ₃, tₐ₄, tₐ₅) de l'intervalle de libération (ΔT₁, ΔT₂, ΔT₃, ΔT₄, ΔT₅) étant déterminé par la station d'abonné (13) au moyen d'un arbitrage bit par bit du premier canal (15).

6. Station d'abonné (13) selon la revendication 5, **caractérisée en ce que** l'élément de couplage (61) est combiné à une impédance de mode commun (59) de telle manière qu'un signal à haute fréquence contenant les premières données (b₁) et les secondes données (b₂) puisse être couplé en entrée ou en sortie par induction.

7. Station d'abonné (13) selon l'une quelconque des revendications 5 à 6, **caractérisé en ce que** le second élément de commande (27) est couplé au premier élément de commande (23) de telle manière que le second élément de commande (27) puisse de préférence être commandé au moyen d'un signal de commande d'accès (a) généré par le premier élément de commande (23) pour libérer l'accès au second canal (19).

8. Station d'abonné (13) selon l'une quelconque des revendications 5 à 7, **caractérisé en ce que** la station d'abonné (13) est conçue pour mettre en oeuvre le procédé selon l'une quelconque des revendications 1 à 4.
